# EUROPEAN PATENT SPECIFICATION

(11) **EP 3 154 062 B1**
(45) Date of publication and mention of the grant of the patent: **31.07.2019**
(21) Application number: 16200780.1
(22) Date of filing: 18.03.2013
(51) Int. Cl.: G21C 17/00, G05B 23/02, G21D 3/00

(54) **PLANT OPERATION ASSISTANCE DEVICE AND PLANT OPERATION ASSISTANCE METHOD OF A NUCLEAR POWER PLANT**
VORRICHTUNG UND VERFAHREN ZUR ANLAGENBETRIEBSUNTERSTÜTZUNG EINES KERNKRAFTWERKES
DISPOSITIF D'ASSISTANCE AU FONCTIONNEMENT ET PROCÉDÉ D'AIDE AU FONCTIONNEMENT D'UNE CENTRALE NUCLÉAIRE

(30) Priority: 26.03.2012 JP 2012070314; 26.11.2012 JP 2012258023
(43) Date of publication of application: 12.04.2017
(62) Divisional of application: 13767260.6
(73) Proprietor: Mitsubishi Heavy Industries, Ltd., Tokyo 108-8215 (JP)
(72) Inventor: YOKOYAMA, Masanori, Tokyo 108-8215 (JP)
(74) Representative: Intès, Didier Gérard André

(56) References cited:
- US-A- 4 711 753

## Description

### Field

The present invention relates to a nuclear power plant operation support device, and a nuclear power plant operation support method.

### Background

(1) In recent years, a central control device of nuclear power plants employs a central control panel that graphically displays information on indicators, operation devices, alarms, and the like, which are connected to onsite sensors and equipment, and that can be operated by touch operation. In order to reduce physical burdens of operators who monitor key parameters of the nuclear power plants and operate the devices, the central control panel is devised to have a size designed in accordance with an average physical frame of Japanese. Moreover, in order to reduce cognitive loads of operators, the central control panel is devised to present alarm importance identification display and to present related indicators and operation devices in combination with each other.
   However, in a conventional configuration, respective functions, such as the indicators, the operation devices, and the alarms, are independent from each other and their integration is not achieved. Under these circumstances, the operators need to interpret the state of the nuclear power plant by combining the information from the indicators, the operation devices, the alarms, and the like, and need to fabricate and execute corresponding operation on the basis of result of interpretation. Accordingly, in order to operate the nuclear power plant, the operators are required not only to learn the knowledge of the nuclear power plant itself but also to master how to comprehensively grasp and interpret the information from the indicators, the operation devices, the alarms, and the like. Furthermore, some operation techniques can be obtained only through mastering. Accordingly, there is a strong demand for systems which can improve operation quality even when operators are unskilled.
   With respect to the conventional central control device of the nuclear power plant in relation to such issues, a technology disclosed in Patent Literature 1 is known.
(2) According to Patent Literature 2, for example, parameter data is stored out of plant data on a plant, and prediction of change in parameter data is displayed on the basis of the parameter data. The prediction of change in parameter data is evaluation based on past similar events. An appropriate countermeasure and its appropriate timing corresponding to change in parameter data are generated on the basis of the stored parameter data, and there are generated first event prediction data which is as a result of prediction of change in parameter data when the appropriate countermeasure is taken at the appropriate timing, and second event prediction data which is as a result of prediction of change in parameter data when the countermeasure is delayed. These first event prediction data and second event prediction data are overlaid and displayed on the same graph.

Although prediction of change in parameter data is evaluation based on the past similar events in Patent Literature 2, the predicted change in parameter data may be different from actual events in some cases. Response measures generated in such cases are purely based on similar events and are different from response measures in the present event. When the plant has an abnormal sign in particular, rapid prediction is necessary. Thus, in order to perform appropriate response measures for the present event, correct and rapid prediction is desired.

US4711753 (A) discloses an apparatus for calibrating an on-line predictor of the performance of the core of a nuclear reactor and more particularly an apparatus for periodically updating axially dependent transverse buckling factors used in a one dimensional neutron diffusion theory model of the core of a pressurized water reactor (PWR). The apparatus comprises a (man-machine interface) MMI to facilitate communications with the human user.

### Citation List

### Patent Literature

Patent Literature 1: Japanese Laid-open Patent Publication No. 2000-249782
Patent Document 2: Japanese Patent No. 4607702 Summary

### Technical Problem

An object of the present disclosure in relation to the issue (1) is to provide a central control device of a nuclear power plant which can reduce a load of an operator and which can improve the safety and reliability of the nuclear power plant.

Another object of the present invention in relation to the issue (2) is to provide a plant operation support device and a plant operation support method which can correctly and promptly predict the operating state of the plant.

### Solution to Problem

According to the present invention in order to achieve the objects, there is provided a nuclear power plant operation support device according to claim 1 and a nuclear power plant operation support method according to claim 4.
According to the disclosure there is provided a central control device of a nuclear power plant, for monitoring and controlling the nuclear power plant, the central control device including: a monitoring operation device having both a function as a display unit that displays information on the nuclear power plant and a function as an operation unit that operates the nuclear power plant; and a control unit that controls the monitoring operation device, wherein the control unit selects an operation procedure document corresponding to an input operation to the monitoring operation device and displays the operation procedure document on the monitoring operation device.

According to an another aspect according to the present disclosure, there is provided a plant operation support device, including: a virtual plant creation unit for acquiring operating state data on an actual plant and creating a virtual plant in conformity to an operating state of the actual plant; a reference data storage unit for storing in advance reference data on the virtual plant assuming various operating states of the actual plant; an operating state monitoring unit for monitoring the operating state of the actual plant and sending the operating state data on the actual plant to the virtual plant creation unit, while acquiring from the reference data storage unit the reference data corresponding to change, if occurs, in the operating state of the actual plant and sending the reference data to the virtual plant creation unit; an operating state prediction unit for creating a predicted virtual plant in which an operating state after a lapse of arbitrary time is predicted by accelerating the operating state of the virtual plant created by the virtual plant creation unit at an arbitrary speed; and an operating state displaying unit for displaying the operating state of the actual plant and the operating state of the predicted virtual plant.

According to a still another aspect according to the present disclosure, there is provided a plant operation support method, including: a virtual plant creation step of acquiring operating state data on an actual plant and creating a virtual plant in conformity to an operating state of the actual plant; an operating state monitoring step of monitoring the operating state of the actual plant and providing the operating state data on the actual plant to the virtual plant creation step, while providing reference data created in advance to correspond to change, if occurs, in the operating state of the actual plant to the virtual plant creation step; an operating state prediction step of creating a predicted virtual plant in which an operating state after a lapse of arbitrary time is predicted by accelerating the operating state of the virtual plant created in the virtual plant creation step at an arbitrary speed; and an operating state display step of displaying the operating state of the actual plant and the operating state of the predicted virtual plant.

### Advantageous Effects of Invention

In the central control device of the nuclear power plant according to the present disclosure, an operation procedure document corresponding to an input operation to a monitoring operation device is displayed on the monitoring operation device. This makes it possible to advantageously reduce a load of an operator, who has to select a necessary operation procedure document from a large amount of operation procedure documents. Since the information from indicators, operation devices, alarms and the like is combined so that information contents suitable for the operation of the moment is presented to the monitoring operation device, the operator can perform a corresponding operation while referring to this information and the operation procedure document. This provides an advantage that operation quality is improved even when the operator is unskilled and thereby the safety and reliability of the nuclear power plant are improved.

According to the plant operation support device (plant operation support method) according to the present invention, the operating state of an actual plant and the operating state of a predicted virtual plant are displayed on an operating state display unit, so that the operating state of the actual plant after a lapse of arbitrary time can be compared with the present operation state. When there is a sudden change in the operating state of the actual plant, in particular, such as in the case where the operating state data includes alarm data, a virtual plant and a predicted virtual plant are immediately created with use of the reference data conformed to the operating state of the actual plant. As a result, correct and rapid prediction can be performed in response to change in the operating state of the actual plant.

### Brief Description of Drawings

FIG. 1 is a configuration view illustrating a nuclear power plant.
FIG. 2 is an external configuration view illustrating a central control device described in FIG. 1.
FIG. 3 is a functional block diagram illustrating the central control device described in FIG. 1.
FIG. 4 is an explanatory view illustrating functions of the central control device described in FIG. 1.
FIG. 5 is an explanatory view illustrating functions of the central control device described in FIG. 1.
FIG. 6 is an explanatory view illustrating functions of the central control device described in FIG. 1.
FIG. 7 is an explanatory view illustrating functions of the central control device described in FIG. 1.
FIG. 8 is a schematic configuration view of a plant with a plant operation support device.
FIG. 9 is a configuration view of the plant operation support device according to an embodiment in accordance with the present invention.
FIG. 10 is a flow chart illustrating processing procedures of the plant operation support device.
FIG. 11 is a flow chart illustrating processing procedures of the plant operation support device.
FIG. 12 is a flow chart illustrating processing procedures of the plant operation support device.
FIG. 13 is a flow chart illustrating processing procedures of the plant operation support device in accordance with the present invention.
FIG. 14 is a flow chart illustrating processing procedures of the plant operation support device in accordance with the present invention.
FIG. 15 is a flow chart illustrating processing procedures of the plant operation support device in accordance with the present invention.

### Description of Embodiments

Hereinbelow, the present invention will be described in detail with reference to the accompanying drawings. The embodiments are not intended to limit the present invention. Moreover, the embodiments include component members which are interchangeable and whose interchangeability is obvious while the identity of the invention is maintained. Furthermore, a plurality of modifications described in the embodiments may arbitrarily be combined with one another without departing from the range that is apparent for those skilled in the art.

### [Nuclear power plant]

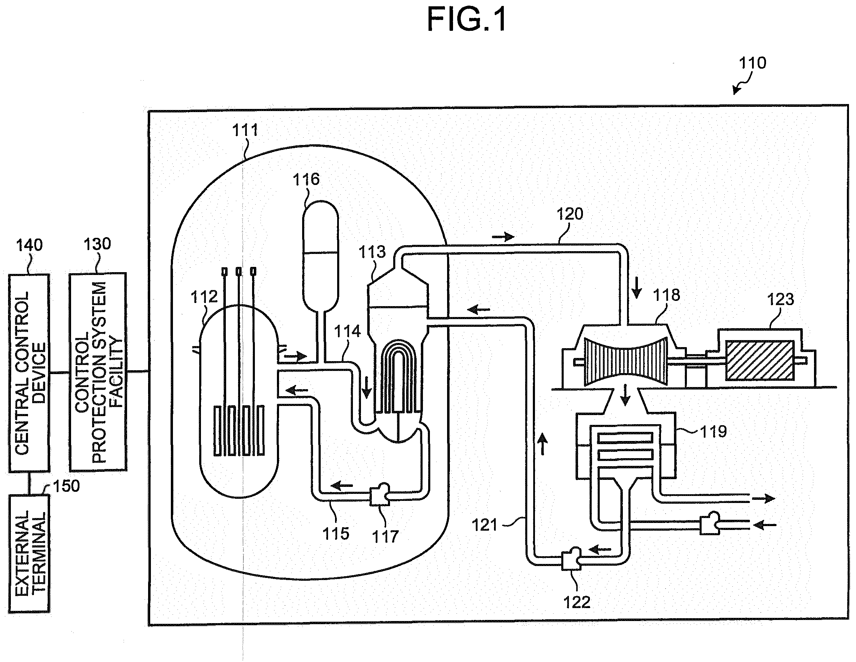

FIG. 1 is a configuration view illustrating a nuclear power plant in accordance with the present disclosure. FIG. 1 illustrates the nuclear power plant including a pressurized water reactor (PWR) in one example. This nuclear power plant may be applied to a nuclear power plant including a boiling water reactor (BWR) (illustration omitted).

A nuclear power plant 110 of FIG. 1 includes a nuclear reactor 112, a steam generator 113, a pressurizer 116, and a cooling water pump 117 in a containment 111. An outlet side of the nuclear reactor 112 and an inlet side of the steam generator 113 are connected to each other via a first cooling water pipe 114, and the pressurizer 116 is placed on the cooling water pipe 114. An outlet side of the steam generator 113 and an inlet side of the nuclear reactor 112 are connected to each other via a second cooling water pipe 115, and a cooling water pump 117 is placed on the second cooling water pipe 115.

The nuclear power plant 110 also includes a steam turbine 118, a condenser 119, and a generator 123. The steam turbine 118 is coupled to the generator 123 via a turbine rotor. An inlet portion of the steam turbine 118 is connected to an outlet portion of the steam generator 113 via a third cooling water pipe 120, while an outlet portion of the steam turbine 118 is connected to the condenser 119. The condenser 119 is connected to an inlet portion of the steam generator 113 via a fourth cooling water pipe 121. A condensate pump 122 is placed on the fourth cooling water pipe 121.

In this nuclear power plant 110, the nuclear reactor 112 uses slightly enriched uranium or mixed oxide (MOX) as a fuel, and also uses light water as primary cooling water and a neutron moderator. The nuclear reactor 112 heats the primary cooling water with the fuel to generate high-temperature and high-pressure water. In this case, in order to suppress boiling of the primary cooling water in a reactor core of the nuclear reactor 112, the pressurizer 116 maintains the primary cooling water in a high pressure state of 150 to 160 atmospheric pressure. As a consequence, there is generated high-temperature and high-pressure primary cooling water which is not boiled throughout the entire reactor core. This high-temperature and high-pressure primary cooling water is supplied to the steam generator 113 via the first cooling water pipe 114.

The steam generator 113 performs heat exchange between the primary cooling water from the nuclear reactor 112 and the secondary cooling water to generate secondary cooling water steam. The steam (secondary cooling water) is supplied to the steam turbine 118 via the third cooling water pipe 120. The cooling water pump 117 returns the heat-exchanged primary cooling water to the nuclear reactor 112 via the second cooling water pipe 115. By circulating the primary cooling water between the nuclear reactor 112 and the steam generators 113, the steam generator 113 continuously generates the secondary cooling water steam.

The steam turbine 118 generates driving torque with the thermal energy of the secondary cooling water coming from the steam generator 113, and drives the generator 123 via a rotor. Thus, the generator 123 operates and generates power. The condenser 119 performs heat exchange between the secondary cooling water which passed the steam turbine 118 and a refrigerant to condense steam. The condenser 119 pumps up and takes in sea water used as a refrigerant from an intake pipe, and discharges the heat-exchanged refrigerant through a drain pipe. The condensate pump 122 returns the heat-exchanged secondary cooling water to the steam generator 113 via the fourth cooling water pipe 121. The generator 123 is continuously driven by circulating the secondary cooling water along the steam generator 113, the steam turbine 118, and the condenser 119.

The nuclear power plant 110 also includes a control protection system facility 130 and a central control device 140.

The control protection system facility 130, which is a general purpose computer or a dedicated purpose computer, includes a rack of reactor control system measuring instruments (illustration omitted) having a central processing unit (CPU), a read only memory (ROM), a random access memory (RAM), and the like. This control protection system facility 130 controls the operation of various devices, such as pumps and valves for operating the nuclear power plant 110, on the basis of signals from various sensors (illustration omitted) which acquire state quantity of the nuclear power plant 110. The control protection system facility 130 also processes the signals from various sensors of the nuclear power plant 110, and outputs specified signals (for example, digital signals indicating process parameters, such as a water level, a pressure, and a flow rate of the nuclear reactor 112, signals indicating the state of respective systems and state of respective devices, alarm signals when abnormality occur, etc.) to the central control device 140. The control protection system facility 130 controls various devices of the nuclear power plant 110 on the basis of the signals from the central control device 140. As a result, the nuclear power plant 110 is controlled so as to implement functions such as stopping nuclear reaction in the nuclear reactor 112, cooling the nuclear power plant 110, and preventing leakage of radioactive substances from the nuclear power plant 110.

The central control device 140 is composed of a central control panel for monitoring and controlling the nuclear power plant 110, and is placed in a central control room of the nuclear power plant 110. The central control device 140 displays specified information relating to the status of the nuclear power plant 110 such as an operating status and a safety status (for example, process parameters, such as the water level, the pressure, and the flow rate of the nuclear reactor 112, the state of respective systems, the state of respective devices, etc.) on a display unit on the basis of the signals from the control protection system facility 130. According to the input operation by an operator, the central control device 140 outputs signals for controlling the respective systems and respective devices of the nuclear power plant 110 to the control protection system facility 130.

### [Specific configuration of central control device]

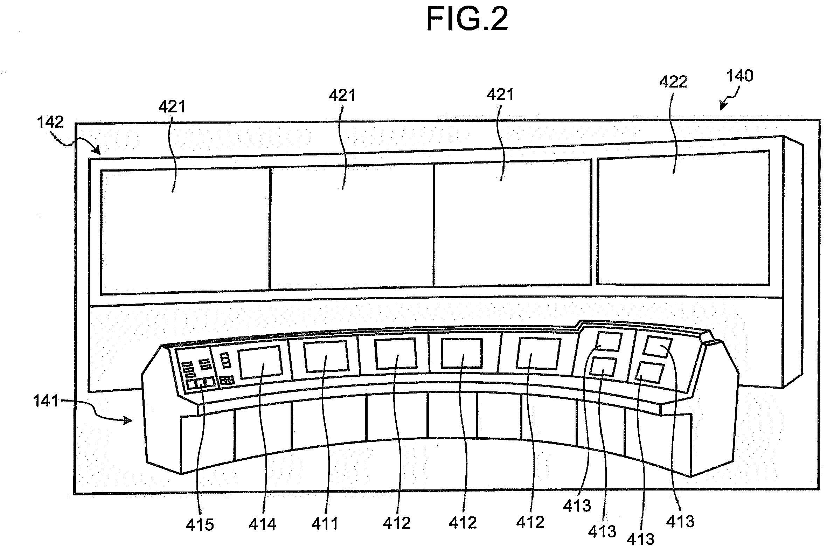

FIG. 2 is an external configuration view illustrating one example of the central control device described in FIG. 1. FIG. 2 illustrates the central control device having a central control panel.

The central control device 140 is a central control device including an operation console 141 and a large-size indicator panel 142 (see FIG. 2).

The operation console 141, which is a device for performing monitoring operation of the nuclear power plant 110, includes an alarm visual display unit (VDU) 411, a common system VDU 412, a safety system VDU 413, an operation procedure document VDU 414, and a hardware operation device 415. The alarm VDU 411 is a monitoring operation device having both a function as a display unit that displays various kinds of alarms relating to the nuclear power plant 110 when abnormality occurs and a function as an operation unit that operates the nuclear power plant 110. The common system VDU 412 is a monitoring operation device having both a function as a display unit that displays information on the nuclear power plant 110 and a function as an operation unit that operates the nuclear power plant 110. The safety system VDU 413 is a monitoring operation device having both a function as a display unit that displays information on a safety system of the nuclear power plant 110 and a function as an operation unit that operates the safety system of the nuclear power plant 110. The operation procedure document VDU 414 is a monitoring operation device having a function to display operation procedure documents, a function as a display unit that displays the information on the nuclear power plant 110, and a function as an operation unit that operates the nuclear power plant 110. The alarm VDU 411, the common system VDU 412, the safety system VDU 413, and the operation procedure document VDU 414 are each composed of, for example, a touch panel operation device. The hardware operation device 415 is composed of various kinds of physical switches for operating the nuclear power plant 110.

The large-size indicator panel 142 includes fixed display units 421 and a variable display unit 422. The fixed display units 421 display key parameters, typical alarms, and the like on the constant basis. The fixed display units 421 are composed of, for example, an OK monitor that displays specified information such as the operating status and the safety status of the nuclear power plant 110, and a bypassed and inoperable state indication (BISI) monitor that displays whether or not various devices such as pumps and valves for operating the nuclear power plant 110 are operational. The variable display unit 422 can selectively display the display screens of the respective VDUs 411 to 414 of the operation console 141.

### [Operation support by using operation procedure documents]

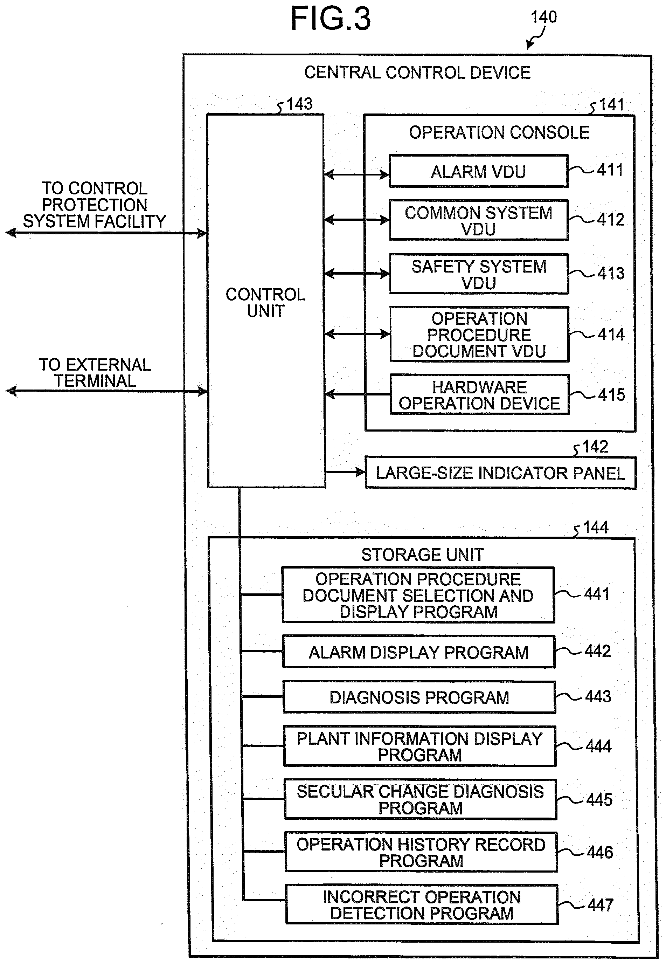

FIG. 3 is a functional block diagram illustrating the central control device described in FIG. 1. In order to provide comprehensive and precise support for the operator in his/her corresponding operation to further improve the safety and reliability of the nuclear power plant 110, the central control device 140 adopts the following configuration.

The central control device 140 includes a control unit 143 and a storage unit 144 (see FIG. 3).

The control unit 143 is, for example, a central processing unit (CPU) which reads and executes various kinds of programs and data stored in the storage unit 144 to perform comprehensive control on the operation of the central control device 140 and to implement various functions. Specifically, the control unit 143 performs display control of the operation console 141 and display control of the large-size indicator panel 142 on the basis of input signals from the control protection system facility 130 and the operation console 141. The control unit 143 also generates signals for controlling various devices of the nuclear power plant 110 on the basis of input signals from the operation console 141, and outputs the generated signals to the control protection system facility 130.

The storage unit 144, which is a nonvolatile memory or a magnetic storage device for example, stores various kinds of programs and data used for processing performed in the control unit 143. Specifically, the storage unit 144 stores an operation procedure document selection and display program 441, an alarm display program 442, a diagnosis program 443, a plant information display program 444, a secular change diagnosis program 445, an operation history record program 446, and an incorrect operation detection program 447. The operation procedure document selection and display program 441 is a program that selects an operation procedure document corresponding to an input operation to one of the monitoring operation devices (the alarm VDU 411, the common system VDU 412, and the safety system VDU 413) of the operation console 141 and displays the operation procedure documents on the pertinent monitoring operation device. The alarm display program 442 is a program that displays corresponding alarms on the pertinent monitoring operation device and the large-size indicator panel 142 on the basis of specified alarm signals. The diagnosis program 443 is a program that diagnoses the status of the nuclear power plant 110 and displays the diagnosis result on the pertinent monitoring operation device. The plant information display program 444 is a program that displays an operation procedure document and information on the nuclear power plant 110 prescribed in the operation procedure document in association with each other on the pertinent monitoring operation device. The secular change diagnosis program 445 is a program that diagnoses change in state quantity of the nuclear power plant 110 during steady operation and displays the diagnosis result on the pertinent monitoring operation device. The operation history record program 446 is a program that records the corresponding operation prescribed in the operation procedure document displayed on the pertinent monitoring operation device and the input operation to the monitoring operation device in association with each other. The incorrect operation detection program 447 is a program that detects inconsistency between the corresponding operation prescribed in the operation procedure document displayed on the pertinent monitoring operation device and the input operation to the monitoring operation device.

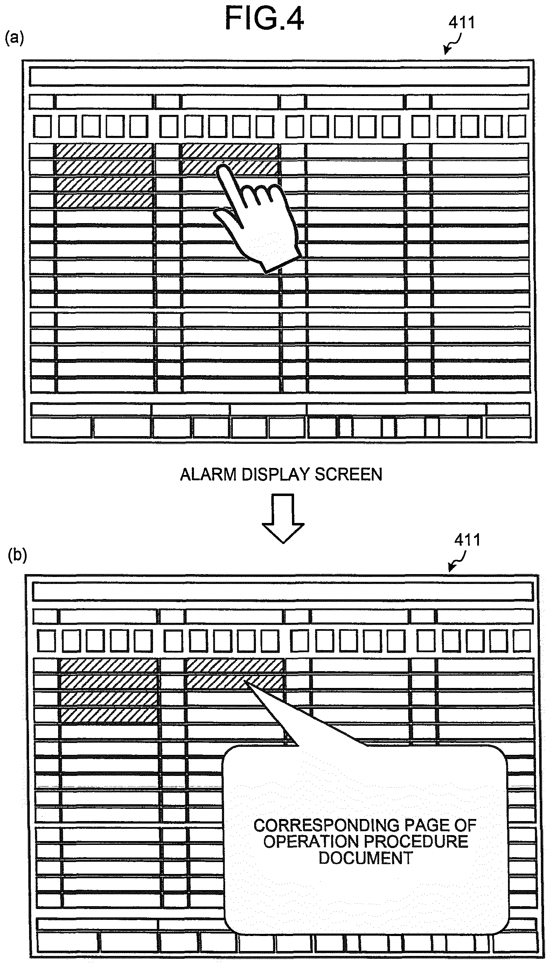

FIGS. 4 to 7 are explanatory views illustrating the functions of the central control device described in FIG. 1. These drawings illustrate the operation support performed with use of the operation procedure documents.

In the central control device 140, as described in the foregoing, the alarm VDU 411, the common system VDU 412, and the safety system VDU 413 on the operation console 141 are each composed of a touch panel operation device, which has both the function as a display unit and the function as an operation unit (see FIGS. 2 and 3). In operation of the nuclear power plant 110, the alarm VDU 411 displays various kinds of alarms when abnormality occurs, the common system VDU 412 displays various kinds of information pieces of the nuclear power plant 110, and the safety system VDU 413 displays various kinds of information pieces relating to the safety system of the nuclear power plant 110. The operator monitors the nuclear power plant 110 with use of these displays, and performs an input operation to one of the monitoring operation devices (the alarm VDU 411, the common system VDU 412, and the safety system VDU 413) as necessary.

Here, when a certain input operation is performed on a monitoring operation device of the operation console 141, the control unit 143 selects an operation procedure document corresponding to the input operation, and pop-up displays the operation procedure document on the monitoring operation device to which the input operation was made. This makes it possible to reduce the load of the operator who has to select a necessary operation procedure document from huge operation procedure documents.

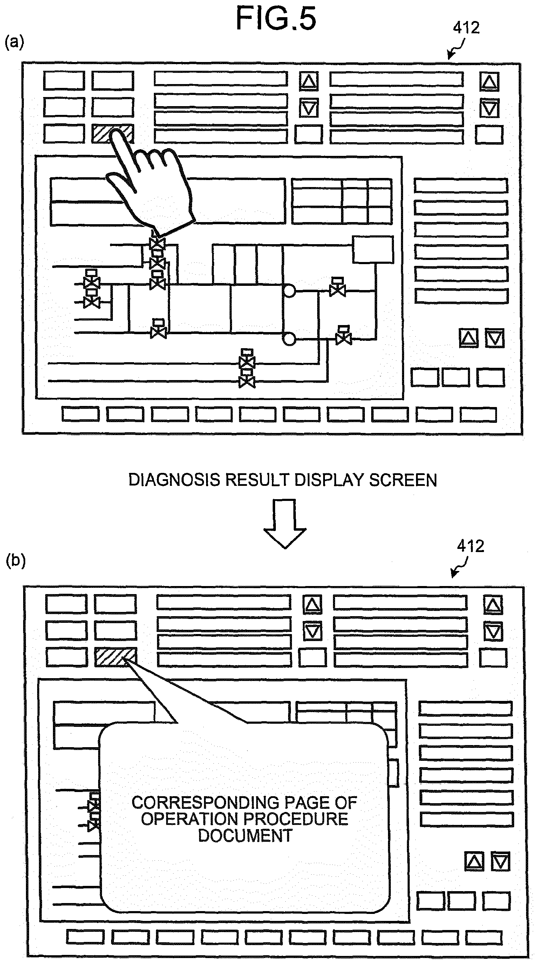

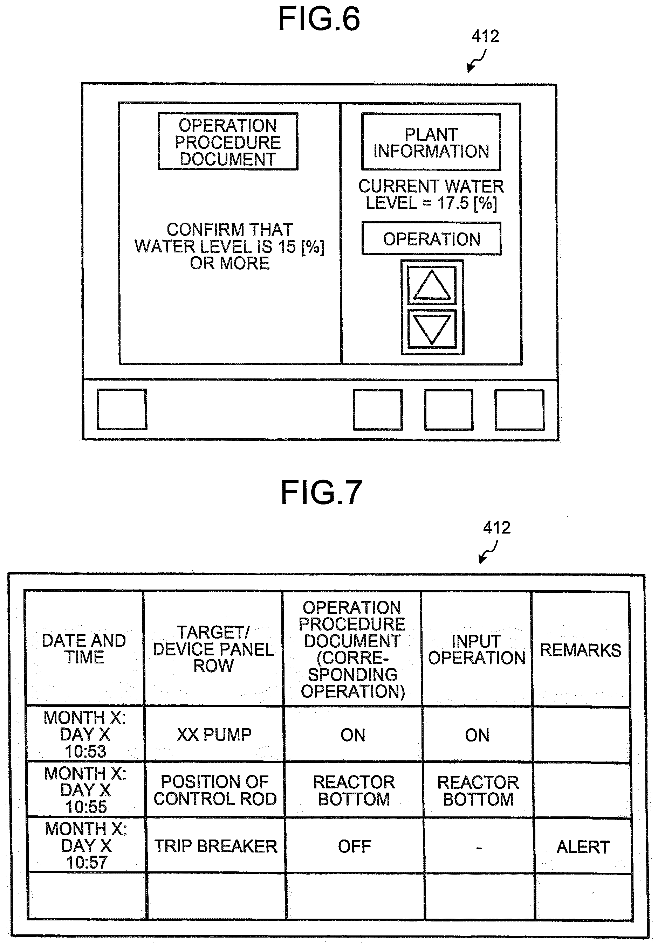

The operation procedure documents include descriptions about operation procedures of the nuclear power plant 110 (for example, activation procedures, shutdown procedures, etc.), corresponding operations when abnormality occurs, a determination logic of the OK monitor, a diagnostic logic of the later-described diagnosis system, and the like.
(1) For example, when abnormality occurs in the nuclear power plant 110, the alarm system is activated. In this alarm system, the control protection system facility 130 detects the occurrence of abnormality on the basis of signals from various sensors (illustration omitted) of the nuclear power plant 110, and outputs an alarm signal to the central control device 140. In response to this, the control unit 143 of the central control device 140 displays an alarm corresponding to the alarm signal on the display screen of the alarm VDU 411 (see FIG. 4(a)). The alarm displayed on the alarm VDU 411 has, for example, display items corresponding to the OK monitor of the fixed display unit 421 on the large-size indicator panel 142. Detailed diagnosis result information is displayed in the form of "OK" button and "NG" button on the screen, which indicate the OK monitor diagnosis result displayed on the pertinent monitoring operation device. The operator can start an operation corresponding to the alarm by touch-operating the buttons in the alarm display screen. In response to this input operation, the control unit 143 selects an operation procedure document regarding the operation corresponding to the alarm (a page where the corresponding operation is described), and displays the operation procedure document on the display screen of the alarm VDU 411 and on the operation procedure document VDU 414 (see FIG. 4(b)). This enables the operator to perform the operation corresponding to the alarm while referring to the operation procedure document.
(2) For example, in an abnormal situation where the control protection system facility 130 outputs a large number of alarm signals, the diagnosis system of the central control device 140 is activated. In this diagnosis system, the control unit 143 diagnoses the status of the nuclear power plant 110 on the basis of the alarm signal from the control protection system facility 130 and the information on the nuclear power plant, and displays the diagnosis result on the common system VDU 412 (see FIG. 5(a)). For example, when an output signal from the water level sensor (illustration omitted) of the nuclear reactor 112 is lowered, the control unit 143 diagnoses an abnormality occurrence location on the basis of signals from the control protection system facility 130, and displays the diagnosis result on the common system VDU 412. The diagnosis result is composed of, for example, display of the abnormality occurrence location with use of a system diagram and the like. The operator can start an operation corresponding to the diagnosis result by touch-operating a button (for example, an auxiliary machine symbol of the system diagram) in the diagnosis result display screen. In response to this input operation, the control unit 143 then selects an operation procedure document regarding the operation corresponding to the diagnosis result, and displays the operation procedure document on the display screen of the common system VDU 412 and on the operation procedure document VDU 414 (see FIG. 5(b)). This enables the operator to perform the operation corresponding to the diagnosis result while referring to the diagnosis result.
   While the above-stated case (1) is an individual correspondence to the alarm signals from the control protection system facility 130, the above-stated case (2) is positioned as an event correspondence in the event where a large number of alarm signals are generated.
(3) The control unit 143 also displays the operation procedure documents selected in the cases (1) and (2) and the information on the nuclear power plant 110 prescribed in these operation procedure documents in association with each other on the pertinent monitoring operation device (see FIG. 6). The information on the nuclear power plant 110 prescribed in the operation procedure document includes specified information relating to the operating status, safety status, etc. of the nuclear power plant 110 (for example, process parameters, such as a water level, a pressure, and a flow rate of the nuclear reactor 112, signals indicating the state of respective systems and the state of respective devices, etc.). For example, when the selected operation procedure document states "confirm that the water level is 15 [%] or more", the control unit 143 selects a current water level from the digital signals coming from the control protection system facility 130, and displays the current water level together with the operation procedure document on the pertinent monitoring operation device. This enables the operator to confirm necessary information while referring to the operation procedure document. When a specified operation to be performed on a specified operation machine is written on the operation procedure document, the control unit 143 can display the operation procedure document and the operation machine to be operated. Furthermore, when a specified measure needs to be taken for the current state of the nuclear power plant 110, the control unit 143 can collect and display the information necessary for the measure on the pertinent monitoring operation device. This can efficiently support the operator in his/her operation.
(4) In the nuclear power plant 110, the state quantity may gradually change. For example, there is a case where the process parameters of the nuclear reactor 112 gradually change due to secular change and seasonal variation. Accordingly, in this central control device 140, the control unit 143 diagnoses change in state quantity of the nuclear power plant 110 during steady operation, and displays the diagnosis result on the common system VDU 412 (illustration omitted). The operator can start an operation corresponding to the diagnosis result by touch-operating a button in a diagnosis result display screen. In response to this input operation, the control unit 143 selects an operation procedure document regarding an operation corresponding to the diagnosis result, and displays the operation procedure document on the display screen of the common system VDU 412. This enables the operator to perform the operation corresponding to the diagnosis result while referring to the operation procedure document.
(5) In the above-described configuration, the control unit preferably records the corresponding operation prescribed in the operation procedure document displayed on the pertinent monitoring operation device and the input operation to the monitoring operation device in association with each other (see FIG. 7). For example, suppose that in response to an input operation to the common system VDU 412, the control unit 143 selects an operation procedure document which prescribes "Turn on XX pump," "Position control rod on the reactor bottom," and "Turn off trip breaker," and displays the operation procedure document on the common system VDU 412. Further suppose that the operator sequentially touch-operates the common system VDU 412 while referring to the operation procedure document to perform the corresponding operation. In this case, the control unit records the contents of the corresponding operation prescribed in the operation procedure document and the input operation to the common system VDU 412 in association with each other. As a result, an execution history of the corresponding operation by the operator can be recorded.
(6) The control unit 143 may further record a case of inconsistency between the contents of the corresponding operation prescribed in the operation procedure document and the input operation to the common system VDU 412 (incorrect operation), and a case where the corresponding operation prescribed in the operation procedure document is not performed (failure of performance of corresponding operation), and may also display alerts on the common system VDU 412. This makes it possible to easily determine whether or not the corresponding operation by the operator is performed in conformity with the operation procedure document.

The above-stated execution history of the corresponding operation is managed in the external terminal 150 (see FIG. 1).

### [Effects]

As described in the foregoing, the central control device 140 of the nuclear power plant 110 monitors and controls the nuclear power plant 110 (see FIG. 1). The central control device 140 also includes monitoring operation devices (for example, the alarm VDU 411, the common system VDU 412, and the safety system VDU 413 of the operation console 141) each having both a function as a display unit that displays information on the nuclear power plant 110 (for example, operation information, safety information, etc.) and a function as an operation unit that operates the nuclear power plant 110, and the control unit 143 that controls these monitoring operation devices (see FIG. 3). The control unit 143 also selects an operation procedure document corresponding to an input operation to a monitoring operation device, and displays the operation procedure document on the monitoring operation device (see FIGS. 4 and 5).

In such configuration, an operation procedure document corresponding to an input operation to a monitoring operation device is displayed on the monitoring operation device, so that the load of the operator, who has to select a necessary operation procedure document from a large amount of operation procedure documents, can advantageously be reduced. Since the information from indicators, operation devices, alarms and the like is combined so that information contents suitable for the operation of the moment is presented to the pertinent monitoring operation device, the operator can perform corresponding operation while referring to this information and the operation procedure document. This provides an advantage that operation quality is improved even when the operator is unskilled and thereby the safety and reliability of the nuclear power plant 110 are improved.

In the central control device 140 of the nuclear power plant 110, the control unit 143 displays on the pertinent monitoring operation device an alarm when abnormality occurs in the nuclear power plant 110 (see FIG. 4). When an input operation to the monitoring operation device is performed in response to this alarm, the control unit 143 selects a corresponding operation procedure document, and displays the document on the monitoring operation device. This provides an advantage that the load of the operator, who has to select a necessary operation procedure document from a large amount of operation procedure documents, can be reduced and thereby the safety and reliability of the nuclear power plant 110 are improved.

In the central control device 140 of this nuclear power plant 110, the control unit 143 diagnoses the status of the nuclear power plant 110, and displays the diagnosis result on the pertinent monitoring operation device (see FIG. 5). When an input operation is performed on the monitoring operation device in response to this diagnosis result, the control unit 143 selects a corresponding operation procedure document, and displays the document on the monitoring operation device. This provides an advantage that the load of the operator, who has to select a necessary operation procedure document from a large amount of operation procedure documents, can be reduced and thereby the safety and reliability of the nuclear power plant 110 are improved.

In the central control device 140 of this nuclear power plant 110, the control unit 143 displays an operation procedure document and information on the nuclear power plant 110 prescribed in the operation procedure document in association with each other on the pertinent monitoring operation device (see FIG. 6). Such configuration provides an advantage that the operator can confirm necessary information while referring to the operation procedure document, so that the operation quality is advantageously improved and thereby the safety and reliability of the nuclear power plant 110 are improved. When a specified operation to be performed on a specified operation machine is written on the operation procedure document, the control unit 143 displays the operation procedure document and the operation machine to be operated, which provides an advantage of being able to efficiently support the operator in his/her operation. Furthermore, when a specified measure needs to be taken for the current state of the nuclear power plant 110, the control unit 143 collects and displays the information necessary for the measure on the pertinent monitoring operation device, which provides an advantage of being able to efficiently support the operator in his/her operation.

In this central control device 140 of the nuclear power plant 110, the control unit 143 also diagnoses transition in the state quantity of the nuclear power plant 110, and displays the diagnosis result on the pertinent monitoring operation device (illustration omitted). When an input operation is performed on the monitoring operation device in response to this diagnosis result, the control unit 143 selects a corresponding operation procedure document, and displays the document on the monitoring operation device. This provides an advantage that the load of the operator, who has to select a necessary operation procedure document from a large amount of operation procedure documents, can be reduced and thereby the safety and reliability of the nuclear power plant 110 are improved.

In this central control device 140 of the nuclear power plant 110, the control unit 143 records a corresponding operation prescribed in the operation procedure document displayed on the pertinent monitoring operation device and an input operation to the monitoring operation device in association with each other (see FIG. 7). In such configuration, an execution history of the corresponding operations by the operator can be recorded, which provides an advantage of being able to determine whether or not the corresponding operation is properly performed in conformity with the operation procedure document.

In this central control device 140 of the nuclear power plant 110, the control unit 143 also detects inconsistency between the corresponding operation prescribed in the operation procedure document displayed on the pertinent monitoring operation device and the input operation to the monitoring operation device (see FIG. 7). This provides an advantage of being able to determine incorrect operation and failure of performance with respect to the corresponding operation.

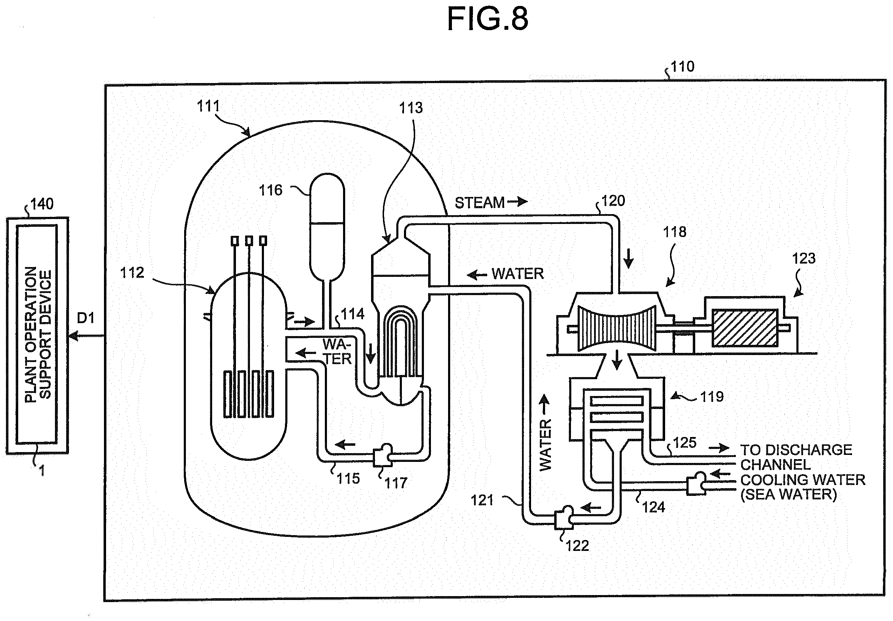

FIG. 8 is a schematic configuration view of a plant with a plant operation support device applied thereto. A plant operation support device 1 is applied to, for example, a nuclear power plant (plant) 110.

In this set-up, a pressurized water reactor 112 is applied to the nuclear power plant 110 for example. The pressurized water reactor 112 uses light water as a nuclear reactor coolant and a neutron moderator, the light water being high-temperature and high-pressure water which is not boiled throughout the entire primary system. This high-temperature and high-pressure water is sent to a steam generator to generate steam through heat exchange, and the generated steam is sent to a turbine generator to generate power.

In the nuclear power plant 110 having the pressurized water reactor 112, the pressurized water reactor 112 and a steam generator 113 are stored inside a containment 111. The pressurized water reactor 112 and the steam generator 113 are coupled via cooling water pipes 114 and 115. The cooling water pipe 114 is equipped with a pressurizer 116, and the cooling water pipe 115 is equipped with a cooling water pump 117. In this case, light water is used as a moderator and primary cooling water, and in order to suppress boiling of the primary cooling water in a reactor core unit, a primary cooling system is controlled to maintain high pressure state in the range of about 160 atmospheric pressure by the pressurizer 116. Therefore, in the pressurized water reactor 112, the light water as the primary cooling water is heated with slightly enriched uranium or MOX as a fuel, and high-temperature primary cooling water is sent to the steam generator 113 through the cooling water pipe 114 in the state of being maintained at a specified high pressure by the pressurizer 116. In this steam generator 113, heat exchange is performed between the high-pressure and high-temperature primary cooling water and the secondary cooling water, and the cooled primary cooling water is returned to the pressurized water reactor 112 through the cooling water pipe 115.

The steam generator 113 is coupled to a turbine 118 and a condenser 119, which are provided outside the containment 111, via the cooling water pipes 120 and 121. The cooling water pipe 121 is equipped with a condensate pump 122. The turbine 118 is connected to a generator 123, while the condenser 119 is coupled to an intake pipe 124 and a drain pipe 125 which supply and discharge the cooling water (for example, sea water). Therefore, the steam generated in the steam generator 113 through heat exchange with the high-pressure and high-temperature primary cooling water is sent to the turbine 118 through the cooling water pipe 120, and the turbine 118 is driven with the steam to generate power in the generator 123. The steam which has driven the turbine 118 is cooled in the condenser 119 and is then returned to the steam generator 113 through the cooling water pipe 121.

The nuclear power plant 110 also includes a central control device 140. The central control device 140, which is a general purpose computer or a dedicated purpose computer, includes a CPU, a ROM, a RAM, and the like. The central control device 140, which is configured to monitor and control the nuclear power plant 110, controls the operation of various devices, such as valves and pumps for operating the nuclear power plant 110, on the basis of operating state data D1 from various sensors (illustration omitted) which acquire the state quantity of the nuclear power plant 110. Specifically, the central control device 140 executes processing based on the operating state data D1 from various sensors of the nuclear power plant 110. The operating state data D1 includes, for example, parameter data indicating parameters, such as a water level, a pressure, and a flow rate of the nuclear reactor 112, device data indicating the state of respective systems and the state of respective devices, and alarm data when abnormality occurs. The central control device 140 controls various devices of the nuclear power plant 110 on the basis of the operating state data D1. As a result, the nuclear power plant 110 is controlled so that functions such as stopping nuclear reaction in the nuclear reactor 112, cooling the nuclear power plant 110, and preventing leakage of radioactive substances from the nuclear power plant 110, are implemented.

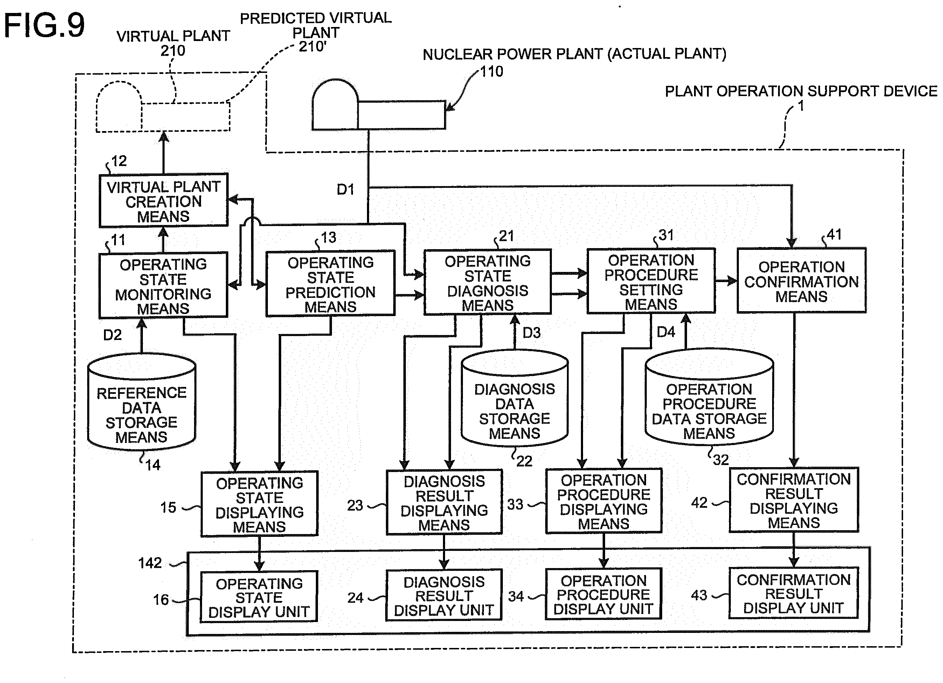

The plant operation support device 1 of this set-up is built into the central control device 140. FIG. 9 is a configuration view of the plant operation support device according to an embodiment of the present invention.

The plant operation support device 1 has a plant operating state prediction function, a plant operating state diagnosis function, a plant operation procedure presentation function, and an operation confirmation function.

### [Plant operating state prediction function]

As illustrated in FIG. 9, the plant operating state prediction function includes operating state monitoring unit 11, virtual plant creation unit 12, operating state prediction unit 13, reference data storage unit 14, and operating state displaying unit 15.

The operating state monitoring unit 11 is configured to monitor the operating state of the nuclear power plant 110. Here, the nuclear power plant 110 is defined as an actual plant that is actually operated. The operating state monitoring unit 11 acquires and analyzes operating state data D1 on the actual plant 110.

The virtual plant creation unit 12 creates a virtual plant 210 in conformity to the operating state of the actual plant 110. The virtual plant creation unit 12 is what is called a simulator, which acquires operating state data D1 on the actual plant 110 from the operating state monitoring unit 11 and simulates the actual plant 110. The virtual plant creation unit 12 reads the operating state data D1 on the actual plant 110 acquired by the operating state monitoring unit 11 with a given period and reflects the operating state data D1 upon the virtual plant 210. With this processing, the operating state of the actual plant 110 is conformed to the operating state (calculated value) of the virtual plant 210. When the operating state data D1 includes alarm data, the operating state monitoring unit 11 immediately acquires the operating state data D1, and the virtual plant creation unit 12 immediately reads the acquired operating state data D1.

The operating state prediction unit 13 accelerates operating state calculation of the virtual plant 210, which was created by the virtual plant creation unit 12, at an arbitrary speed so as to calculate the operating state after a lapse of arbitrary time. As a result, a predicted virtual plant 210' in which the operating state after a lapse of arbitrary time is predicted is created.

The reference data storage unit 14 is a data base storing in advance reference data D2 for creating the virtual plant 210 assuming various operating states of the actual plant 110. The various operating states of the actual plant 110 include, for example, a state of 100% rated operation, a start-up operating state, and a state immediately after automatic shutdown. The reference data D2 is the data created in advance in conformity to the operating states of the actual plant 110, so that the reference data D2 conforms to the actual operating state of the actual plant 110.

According to an operating state of the actual plant 110, the operating state monitoring unit 11 acquires reference data D2 corresponding to the operating state from the reference data storage unit 14, and sends the reference data D2 to the virtual plant creation unit 12. The virtual plant creation unit 12 creates a virtual plant 210 based on the sent reference data D2.

The operating state displaying unit 15 is configured to display the operating state of the actual plant 110 and the operating state of a predicted virtual plant 210'. The operating state of the actual plant 110 is input from the operating state monitoring unit 11. The operating state of the predicted virtual plant 210' is input from the operating state prediction unit 13. The operating state of the actual plant 110 and the operating state of the predicted virtual plant 210' are displayed, for example, on an operating state display unit 16 in the large-size indicator panel 142 placed in the central control room (not illustrate) including the central control device 140. In response to the operation by the operator, the operating state displaying unit 15 makes the operating state display unit 16 switch and display either the operating state of the actual plant 110 or the operating state of the predicted virtual plant 210', or display both the operating states in combination.

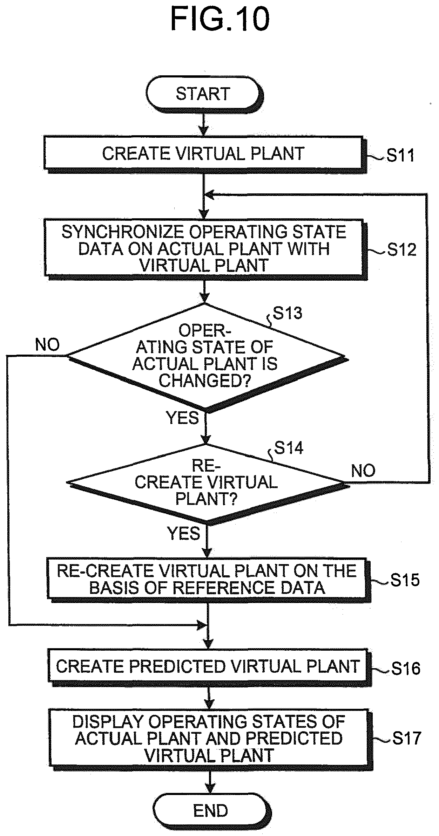

FIG. 10 is a flow chart illustrating processing procedures of the plant operation support device. FIG. 10 illustrates the processing procedures of the plant operating state prediction function in the plant operation support device 1.

As illustrated in FIG. 10, the operating state data D1 on the actual plant 110 acquired by the operating state monitoring unit 11 is first sent to the virtual plant creation unit 12, where the virtual plant 210 is created (step S11).

Next, the operating state data D1 on the actual plant 110 acquired by the operating state monitoring unit 11 is sent to the virtual plant creation unit 12 with a given period. In the virtual plant creation unit 12, the operating state (calculated value) of the virtual plant 210 is synchronized with and is thereby conformed to the operating state data D1 on the actual plant 110 (step S12).

Next, when the operating state data D1 (operating state) on the actual plant 110 acquired by the operating state monitoring unit 11 is changed from the previous data (step S13: Yes), the processing proceeds to step S14. On the contrary, when the operating state data D1 on the actual plant 110 acquired by the operating state monitoring unit 11 is not changed from the previous data (step S13: No), the processing proceeds to step S16.

In step S14, it is determined whether or not to re-create the virtual plant 210 in the virtual plant creation unit 12. When the virtual plant 210 is re-created (step S14: Yes) and the operating state data D1 includes alarm data in particular, the operating state monitoring unit 11 reads reference data D2 from the reference data storage unit 14, and sends the reference data D2 to the virtual plant creation unit 12, where the virtual plant 210 is re-created (step S15). On the contrary, when the actual plant 110 is not in an abnormal operation state, such as in the case where the operating state data D1 does not include alarm data, it is determined that the virtual plant 210 is not re-created (step S14: No), and the processing returns to step S12.

Next, operating state calculation is accelerated from the operating state of the latest virtual plant 210 at an arbitrary speed in the operating state prediction unit 13, so that a predicted virtual plant 210' is created in the virtual plant creation unit 12 (step S16). The operating state of the predicted virtual plant 210' is sent to the operating state prediction unit 13.

Finally, the operating state of the actual plant 110 is acquired from the operating state monitoring unit 11 by the operating state displaying unit 15, while the operating state of the predicted virtual plant 210' is acquired from the operating state prediction unit 13. These operating states are displayed on the operating state display unit 16 (step S17) .

Thus, in the plant operating state prediction function, the plant operation support device 1 includes: the virtual plant creation unit 12 for acquiring operating state data D1 on the actual plant 110 and creating a virtual plant 210 in conformity to the operating state of the actual plant 110; the reference data storage unit 14 for storing in advance reference data D2 on the virtual plant 210 assuming various operating states of the actual plant 110; the operating state monitoring unit 11 for monitoring the operating state of the actual plant 110 and sending the operating state data D1 on the actual plant 110 to the virtual plant creation unit 12, while acquiring reference data D2 corresponding to a change, if occurs, in the operating state of the actual plant 110 from the reference data storage unit 14 and sending the reference data D2 to the virtual plant creation unit 12; the operating state prediction unit 13 for creating a predicted virtual plant 210' in which an operating state after a lapse of arbitrary time is predicted by accelerating the operating state of the virtual plant 210 created by the virtual plant creation unit 12 at an arbitrary speed; and the operating state displaying unit 15 for displaying the operating state of the actual plant 110 and the operating state of the predicted virtual plant 210'.

In the plant operating state prediction function, a plant operation support method of this second embodiment includes: a virtual plant creation step of acquiring operating state data D1 on the actual plant 110 and creating the virtual plant 210 in conformity to the operating state of the actual plant 110; an operating state monitoring step of monitoring the operating state of the actual plant 110 and sending the operating state data on the actual plant 110 to the virtual plant creation step, while providing the virtual plant creation step with reference data D2 created in advance to correspond to a change, if occurs, in the operating state of the actual plant 110; an operating state prediction step of creating a predicted virtual plant 210' in which an operating state after a lapse of arbitrary time is predicted by accelerating the operating state of the virtual plant 210 created in the virtual plant creation step at an arbitrary speed; and an operating state display step of displaying the operating state of the actual plant 110 and the operating state of the predicted virtual plant 210'.

According to the above configurations, the operating state of the actual plant 110 and the operating state of the predicted virtual plant 210' are displayed on the operating state display unit 16, so that the operating state of the actual plant 110 after a lapse of arbitrary time can be compared with the current state. When the operating state of the actual plant 110 suddenly changes, such as in the case where the operating state data D1 includes alarm data in particular, the virtual plant 210 and the predicted virtual plant 210' are immediately created with use of the reference data D2 conformed to the operating state of the actual plant 110, so that correct and rapid prediction can be achieved in response to the change in the operating state of the actual plant 110.

While the operating state data D1 on the actual plant 110 is acquired and synchronized with a fixed cycle, the predicted virtual plant 210' can be created with use of the reference data D2 without waiting for the operating state data D1 to be read out if the operating state of the actual plant 110 is suddenly changed. This makes it possible to perform more rapid prediction. Moreover, after the predicted virtual plant 210' is created with use of the reference data D2, the operating state data D1 on the actual plant 110 is acquired and synchronized by interruption, so that more correct prediction can be performed.

### [Plant operating state diagnosis function]

The plant operating state diagnosis function includes operating state diagnosis unit 21, diagnosis data storage unit 22, and diagnosis result displaying unit 23 as illustrated in FIG. 9.

The operating state diagnosis unit 21 diagnoses the operating state of the actual plant 110, while diagnosing the operating state of the predicted virtual plant 210'. The operating state data D1 on the actual plant 110 is acquired, and the operating state of the actual plant 110 is diagnosed on the basis of the operating state data D1. The operating state of the predicted virtual plant 210' is acquired from the operating state prediction unit 13, and diagnosis based on this is performed.

The diagnosis data storage unit 22 is a data base storing in advance diagnosis data D3 conformed to the operating states of the actual plant 110 and/or the predicted virtual plant 210'. The diagnosis data D3 includes, for example, data for diagnosing the data equivalent to the operating state data D1, such as parameter diagnosis data indicating parameters, such as a water level, a pressure, and a flow rate of the nuclear reactor 112, device diagnosis data indicating the state of respective systems and the state of respective devices, and alarm diagnosis data when abnormality occurs. The diagnosis data D3 is read in diagnosing operation performed by the operating state diagnosis unit 21.

The diagnosis result displaying unit 23 is configured to display the result of diagnosing the operating state of the actual plant 110 and the result of diagnosing the operating state of the predicted virtual plant 210'. The result of diagnosing the operating state of the actual plant 110 and the result of diagnosing the operating state of the predicted virtual plant 210' are input from the operating state diagnosis unit 21. The result of diagnosing the operating state of the actual plant 110 and the result of diagnosing the operating state of the predicted virtual plant 210' are displayed, for example, on a diagnosis result display unit 24 in the large-size indicator panel 142 placed in the central control room (not illustrate) including the central control device 140. In response to the operation by the operator, the diagnosis result displaying unit 23 makes the diagnosis result display unit 24 switch and display either the result of diagnosing the operating state of the actual plant 110 or the result of diagnosing the operating state of the predicted virtual plant 210', or display both the diagnosis results.

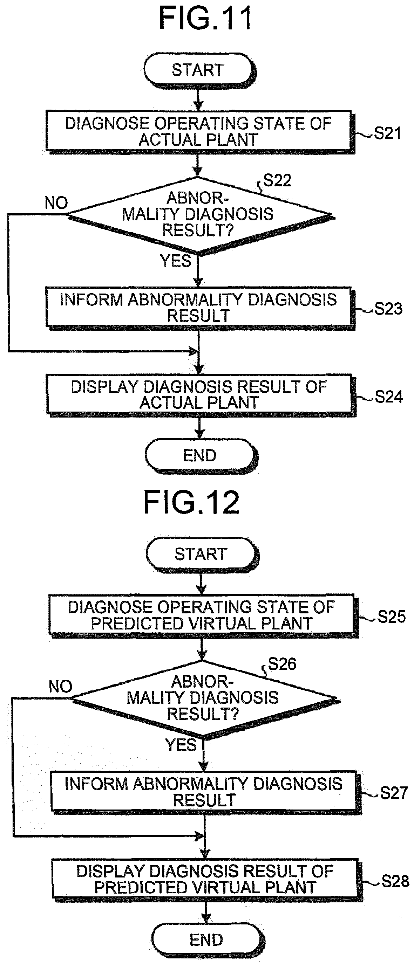

FIGS. 11 and 12 are flow charts illustrating processing procedures of the plant operation support device. FIG. 11 illustrates the processing procedure for diagnosing the operating state of the actual plant 110 in the plant operating state diagnosis function in the plant operation support device 1. FIG. 12 illustrates the processing procedure for diagnosing the operating state of the predicted virtual plant 210' in the plant operating state diagnosis function in the plant operation support device 1.

For diagnosing the operating state of the actual plant 110, the operating state of the actual plant 110 is first diagnosed by the operating state diagnosis unit 21 as illustrated in FIG. 11 (step S21). Specifically, the operating state data D1 on the actual plant 110 is sent to the operating state diagnosis unit 21. The operating state diagnosis unit 21 reads diagnosis data D3 from the diagnosis data storage unit 22 according to the operating state data D1, and compares the data D1 and the data D3.

Next, when the diagnosis result of diagnosing the operating state of the actual plant 110 by the operating state diagnosis unit 21 is an abnormality diagnosis result (step S22: Yes), the abnormality diagnosis result is informed (step S23). The abnormality diagnosis result may be informed simply by displaying the result on the diagnosis result display unit 24 by the diagnosis result displaying unit 23 (step S24). The abnormality diagnosis result may also be informed by a buzzer and/or a voice message not illustrated in the drawing. The abnormality diagnosis result herein refers to the case where inconsistency is present between the data D1 and the data D3.

On the contrary, when the diagnosis result of diagnosing the operating state of the actual plant 110 by the operating state diagnosis unit 21 is not an abnormality diagnosis result (step S22: No), the diagnosis result is displayed on the diagnosis result display unit 24 by the diagnosis result displaying unit 23 (step S24).

For diagnosing the operating state of the predicted virtual plant 210', the operating state of the predicted virtual plant 210' is first diagnosed by the operating state diagnosis unit 21 as illustrated in FIG. 11 (step S25). Specifically, the operating state of the predicted virtual plant 210' is acquired from the operating state prediction unit 13, and is sent to the operating state diagnosis unit 21. The operating state diagnosis unit 21 reads diagnosis data D3 from the diagnosis data storage unit 22 according to the operating state, and compares these.

Next, when the diagnosis result diagnosing the operating state of the predicted virtual plant 210' by the operating state diagnosis unit 21 is an abnormality diagnosis result (step S26: Yes), the abnormality diagnosis result is informed (step S27). The abnormality diagnosis result may be informed simply by displaying the result on the diagnosis result display unit 24 by the diagnosis result displaying unit 23 (step S28). The abnormality diagnosis result may also be informed by a buzzer and/or a voice message not illustrated in the drawing. The abnormality diagnosis result herein refers to the case where inconsistency is present between the data D1 and the data D3.

On the contrary, when the diagnosis result of the operating state diagnosis unit 21 diagnosing the operating state of the predicted virtual plant 210' is not an abnormality diagnosis result (step S26: No), the diagnosis result is displayed on the diagnosis result display unit 24 by the diagnosis result displaying unit 23 (step S28).

Thus, in the plant operating state diagnosis function, the plant operation support device 1 of this embodiment includes the operating state diagnosis unit 21 for diagnosing the operating state of the actual plant 110 while diagnosing the operating state of the predicted virtual plant 210', and the diagnosis result displaying unit 23 for displaying the diagnosis result of the actual plant 110 and the diagnosis result of the predicted virtual plant 210'.

In the plant operating state diagnosis function, the plant operation support method of this embodiment also includes an operating state diagnosis step of diagnosing the operating state of the actual plant 110 while diagnosing the operating state of the predicted virtual plant 210', and a diagnosis result display step of displaying the diagnosis result of the actual plant 110 and the diagnosis result of the predicted virtual plant 210'.

According to the above configurations, the operating state of the actual plant 110 is diagnosed, while the operating state of the predicted virtual plant 210', which is created as a result of correct and rapid prediction in response to the change in the operating state of the actual plant 110 in the plant operating state prediction function, is diagnosed, so that comparison of both the diagnosis results in accordance with the prediction can correctly and promptly be performed.

### [Plant operation procedure presentation function]

The plant operation procedure presentation function includes operation procedure setting unit 31, operation procedure data storage unit 32, and operation procedure displaying unit 33 as illustrated in FIG. 9.

The operation procedure setting unit 31, which corresponds to the diagnosis result in the aforementioned plant operating state diagnosis function, sets operation procedures of the actual plant 110 while setting operation procedures of the predicted virtual plant 210'. The diagnosis result of the actual plant 110 is acquired from the operating state diagnosis unit 21, and the operation procedures of the actual plant 110 are set on the basis of the diagnosis result. The diagnosis result of the predicted virtual plant 210' is acquired from the operating state diagnosis unit 21, and the operation procedures of the predicted virtual plant 210' are set on the basis of the diagnosis result.

The operation procedure data storage unit 32 is a data base storing in advance operation procedure data D4 conformed to the result of diagnosing the operating states of the actual plant 110 and/or the predicted virtual plant 210'. The operation procedure data D4 includes, for example, operation procedures corresponding to change in such data as parameter diagnosis data indicating parameters, such as a water level, a pressure, and a flow rate of the nuclear reactor 112, device diagnosis data indicating the state of respective systems and the state of respective devices, and alarm diagnosis data when abnormality occurs. The operation procedure data D4 is read in setting operation performed by the operation procedure setting unit 31.

The operation procedure displaying unit 33 is configured to display the operation procedures set for the actual plant 110 and the predicted virtual plant 210'. The operation procedures of the actual plant 110 and the predicted virtual plant 210' are input from the operation procedure setting unit 31. The operation procedures of the actual plant 110 and the predicted virtual plant 210' are displayed, for example, on an operation procedure display unit 34 in the large-size indicator panel 142 placed in the central control room (not illustrate) including the central control device 140. In response to the operation by the operator, the operation procedure displaying unit 33 makes the operation procedure display unit 34 switch and display either the operation procedures of the actual plant 110 or the operation procedures of the predicted virtual plant 210', and/or display both the operating procedures.

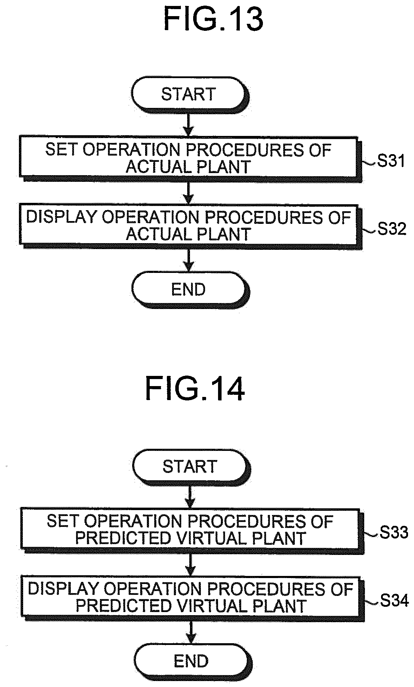

FIGS. 13 and 14 are flow charts illustrating processing procedures of the plant operation support device in accordance with this embodiment. FIG. 13 illustrates the processing procedures for setting the operation procedures of the actual plant 110 in the plant operation procedure presentation function in the plant operation support device 1. FIG. 14 illustrates the processing procedures for setting the operation procedures of the predicted virtual plant 210' in the plant operation procedure presentation function in the plant operation support device 1.

For setting the operation procedures of the actual plant 110, the operation procedures of the actual plant 110 are first set by the operation procedure setting unit 31 as illustrated in FIG. 13 (step S31). Specifically, the operating state of the actual plant 110 diagnosed by the operating state diagnosis unit 21 is sent to the operation procedure setting unit 31. The operation procedure setting unit 31 reads the operation procedure data D4 from the operation procedure data storage unit 32 according to the operating state, and sets the operation procedures on the basis of this operation procedure data D4.

Next, the operation procedures of the actual plant 110 set by the operation procedure setting unit 31 are displayed on the operation procedure display unit 34 by the operation procedure displaying unit 33 (step S32).

For setting the operation procedures of the predicted virtual plant 210', the operation procedures of the predicted virtual plant 210' are first set by the operation procedure setting unit 31 as illustrated in FIG. 14 (step S33). Specifically, the operating state of the predicted virtual plant 210' diagnosed by the operating state diagnosis unit 21 is sent to the operation procedure setting unit 31. The operation procedure setting unit 31 reads the operation procedure data D4 from the operation procedure data storage unit 32 according to the operating state, and sets the operation procedure on the basis of this operation procedure data D4.

Next, the operation procedures of the predicted virtual plant 210' set by the operation procedure setting unit 31 are displayed on the operation procedure display unit 34 by the operation procedure displaying unit 33 (step S33).

Thus, in the plant operation procedure presentation function, the plant operation support device 1 of this embodiment includes the operation procedure setting unit 31 for setting the operation procedures corresponding to the diagnosis result of the actual plant 110, while setting the operation procedures corresponding to the diagnosis result of the predicted virtual plant 210', and the operation procedure displaying unit 33 for displaying the operation procedures of the actual plant 110 and the operation procedures of the predicted virtual plant 210'.

In the plant operation procedure presentation function, the plant operation support method of this embodiment also includes an operation procedure setting step of setting the operation procedures corresponding to the diagnosis result of the actual plant 110, while setting the operation procedures corresponding to the diagnosis result of the predicted virtual plant 210', and an operation procedure display step of displaying the operation procedures of the actual plant 110 and the operation procedures of the predicted virtual plant 210'.

According to the above configurations, the operation procedures of the actual plant 110 are set, while the operation procedures of the predicted virtual plant 210', which is created as a result of correct and rapid prediction in response to the change in the operating state of the actual plant 110 in the plant operating state prediction function, are set so that setting of the operation procedures in accordance with the prediction can correctly and promptly be performed.

### [Operation confirmation function]

The operation confirmation function includes operation confirmation unit 41 and confirmation result displaying unit 42 as illustrated in FIG. 9.

The operation confirmation unit 41, which corresponds to setting of the operation procedures in the aforementioned plant operation procedure presentation function, confirms whether or not the operation of the actual plant 110 is in conformity with the operation procedure. For confirmation of the operation of the actual plant 110, the operating state data D1 is acquired, while the set operation procedures are acquired from the operation procedure setting unit 31, and the operating state data D1 and the operation procedure are compared for confirmation.

The operation confirmation unit 41 is configured to display the result of confirming the operation of the actual plant 110. The result of confirming the operation of the actual plant 110 is input from the operation confirmation unit 41. The result of confirming the operation of the actual plant 110 is displayed, for example, on a confirmation result display unit 43 in the large-size indicator panel 142 placed in the central control room (not illustrate) including the central control device 140.

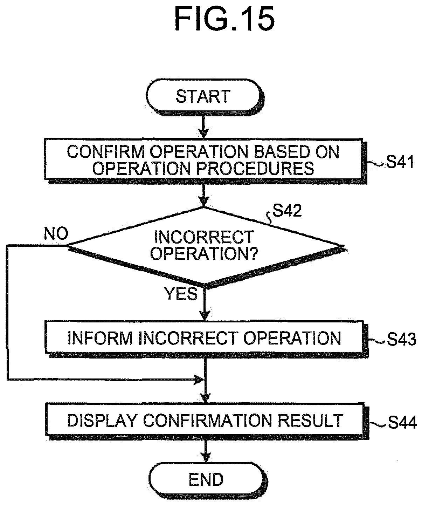

FIG. 15 is a flow chart illustrating processing procedures of the plant operation support device. FIG. 15 illustrates the processing procedures for confirming the operation of the actual plant 110 in the operation confirmation function in the plant operation support device 1.

For confirmation of the operation of the actual plant 110, the operation is first confirmed by the operation confirmation unit 41 on the basis of the operation procedures as illustrated in FIG. 15 (step S41). Specifically, after the operation based on the operation procedures is performed, the operating state data D1 on the actual plant 110 is sent to the operation confirmation unit 41, while the set operation procedures are sent from the operation procedure setting unit 31, and both the operating state data D1 and the operation procedures are compared.

Next, when the confirmation result of confirming the operation of the actual plant 110 by the operation confirmation unit 41 is an incorrect operation (step S42: Yes), the incorrect operation is informed (step S43). The incorrect operation may be informed simply by displaying the result on the confirmation result display unit 43 by the confirmation result displaying unit 42 (step S44). The incorrect operation may also be informed by a buzzer and/or a voice message not illustrated in the drawing. The incorrect operation herein refers to the case where the operation in the operating state data D1 is different from the operation in the set operation procedures.

On the contrary, when the confirmation result of confirming the operation of the actual plant 110 by the operation confirmation unit 41 is not an incorrect operation (step S42: No), the confirmation result is displayed on the confirmation result display unit 43 by the confirmation result displaying unit 42 (step S44).

Thus, in the operation confirmation function, the plant operation support device 1 of this embodiment includes the operation confirmation unit 41 for confirming whether or not the operation of the actual plant 110 is in conformity with the operation procedures, and the confirmation result displaying unit 42 for displaying the confirmation result of the operation.

In the operation confirmation function, the plant operation support method of this embodiment includes an operation confirmation step of confirming whether or not the operation of the actual plant 110 is in conformity with the operation procedure, and a confirmation result display step of displaying the confirmation result of the operation.

According to the foregoing description, it becomes possible to confirm whether or not the operation procedures of the actual plant 110 are correct.

### Reference Signs List

1 Plant operation support device
11 Operating state monitoring unit
12 Virtual plant creation unit
13 Operating state prediction unit
14 Reference data storage unit
15 Operating state displaying unit
16 Operating state display unit
21 Operating state diagnosis unit
22 Diagnosis data storage unit
23 Diagnosis result displaying unit
24 Diagnosis result display unit
31 Operation procedure setting unit
32 Operation procedure data storage unit
33 Operation procedure displaying unit
34 Operation procedure display unit
41 Operation confirmation unit
42 Confirmation result displaying unit
43 confirmation result display unit
110 Nuclear power plant
111 Containment
112 Pressurized water reactor
113 Steam generator
114, 115 Cooling water pipe
116 Pressurizer
117 Cooling water pump
118 Steam turbine
119 Condenser
120, 121 Cooling water pipe
122 Condensate pump
123 Generator
124 Intake pipe
125 Drain pipe
130 Control protection system facility
140 Central control device
141 Operation console
411 Alarm VDU
412 Common system VDU
413 Safety system VDU
414 Operation procedure document VDU
415 Hardware operation device
142 Large-size indicator panel
421 Fixed display unit
422 Variable display unit
143 Control unit
144 Storage unit
441 Operation procedure document selection and display program
442 Alarm display program
443 Diagnosis program
444 Plant information display program
445 Secular change diagnosis program
446 Operation history record program
447 Incorrect operation detection program
150 External terminal
210 Virtual plant
210' Predicted virtual plant

## Claims

1. A nuclear power plant operation support device (1), comprising:
a virtual plant creation unit (12) arranged for acquiring operating state data on an actual plant, simulating the actual plant and creating a virtual plant, the virtual plant creation unit reading the operating state data with a given period and reflecting the operating state data upon the virtual plant such that an operating state of the actual plant is conformed to that of the virtual plant;
a reference data storage unit (14) for storing in advance reference data for creating the virtual plant conforming to various operating states of the actual plant;
an operating state monitoring unit (11) arranged for monitoring the operating state of the actual plant and sending the operating state data on the actual plant to the virtual plant creation unit (12), while acquiring from the reference data storage unit (14) the reference data corresponding to the operating state, if occurs, in the operating state of the actual plant and sending the reference data to the virtual plant creation unit (12);
an operating state prediction unit (13) arranged for creating a predicted virtual plant in which an operating state after a lapse of arbitrary time is predicted by accelerating the operating state of the virtual plant created by the virtual plant creation unit (12) at an arbitrary speed, the operating state after the lapse of arbitrary time being predicted by the operating state prediction unit (13); and
an operating state displaying unit (15) for displaying the operating state of the actual plant and the operating state of the predicted virtual plant on an operating state display unit (16),
**characterized by** further comprising:
an operating state diagnosis unit (21) arranged for diagnosing the operating state of the actual plant, while diagnosing the operating state of the predicted virtual plant; and
a diagnosis result displaying unit (23) arranged for displaying a diagnosis result of the actual plant and a diagnosis result of the predicted virtual plant on an diagnosis result display unit (24).

2. The nuclear power plant operation support device (1) according to claim 1, further comprising:
an operation procedure setting unit (31) for setting operation procedures corresponding to the diagnosis result of the actual plant, while setting operation procedures corresponding to the diagnosis result of the predicted virtual plant;
an operation procedure data storage unit (32) for storing operation procedure data conformed to the result of diagnosing the operating states of the actual plant and that of the predicted virtual plant; and
an operation procedure displaying unit (33) for displaying the operation procedures of the actual plant and the operation procedures of the predicted virtual plant.

3. The nuclear power plant operation support device (1) according to claim 2, further comprising:
an operation confirmation unit (41) for confirming whether or not the operation of the actual plant is in conformity with the operation procedures; and
a confirmation result displaying unit (42) for displaying a confirmation result of the operation.

4. A nuclear power plant operation support method, comprising:
a virtual plant creation step of acquiring operating state data on an actual plant, simulating the actual pant and creating a virtual plant, the virtual plant creation step of reading the operating state data with a given period and reflecting the operating state data upon the virtual plant such that an operating state of the actual plant is conformed to that of the virtual plant;
an operating state monitoring step of monitoring the operating state of the actual plant and providing the operating state data on the actual plant to the virtual plant creation step, while providing reference data created in advance to correspond to the operating state, if occurs, in the operating state of the actual plant to the virtual plant creation step;
an operating state prediction step of creating a predicted virtual plant in which an operating state after a lapse of arbitrary time is predicted by accelerating the operating state of the virtual plant created in the virtual plant creation step at an arbitrary speed; and
an operating state display step of displaying the operating state of the actual plant and the operating state of the predicted virtual plant,
**characterized by** further comprising:
an operating state diagnosis step of diagnosing the operating state of the actual plant, while diagnosing the operating state of the predicted virtual plant; and
a diagnosis result display step of displaying a diagnosis result of the actual plant and a diagnosis result of the predicted virtual plant.

5. The nuclear power plant operation support method according to claim 4, further comprising:
an operation procedure setting step of setting operation procedures corresponding to the diagnosis result of the actual plant, while setting operation procedures corresponding to the diagnosis result of the predicted virtual plant;
an operation procedure data storage step of storing operation procedure data conformed to the result of diagnosing the operating states of the actual plant and that of the predicted virtual plant; and
an operation procedure display step of displaying the operation procedures of the actual plant and the operation procedures of the predicted virtual plant.

6. The nuclear power plant operation support method according to claim 5, further comprising:
an operation confirmation step of confirming whether or not the operation of the actual plant is in conformity with the operation procedures; and
a confirmation result display step of displaying a confirmation result of the operation.

## Patentansprüche

1. Unterstützungsvorrichtung (1) für den Betrieb eines Kernkraftwerks, umfassend:
eine virtuelle Anlagenerstellungseinheit (12), angeordnet zum Erfassen von Betriebszustandsdaten einer tatsächlichen Anlage, zum Simulieren der tatsächlichen Anlage und zum Erstellen einer virtuellen Anlage, wobei die Einheit zum Erstellen der virtuellen Anlage die Betriebszustandsdaten innerhalb einer vorgegebenen Periode erfasst und die Betriebszustandsdaten derart auf die virtuelle Anlage widerspiegelt, dass ein Betriebszustand der tatsächlichen Anlage mit dem der virtuellen Anlage übereinstimmt;
eine Referenzdatenspeichereinheit (14) zum Speichern von Referenzdaten im Voraus zum Erstellen der virtuellen Anlage, die mit verschiedenen Betriebszuständen der tatsächlichen Anlage übereinstimmt;
eine Betriebszustandsüberwachungseinheit (11), angeordnet zum Überwachen des Betriebszustands der tatsächlichen Anlage und zum Senden der Betriebszustandsdaten der tatsächlichen Anlage an die virtuelle Anlagenerstellungseinheit (12) während eines Erfassens, von der Referenzdatenspeichereinheit (14), von Referenzdaten, die dem Betriebszustand entsprechen, falls dies im Betriebszustand der tatsächlichen Anlage auftritt, und Senden der Referenzdaten an die virtuelle Anlagenerstellungseinheit (12);
eine Betriebszustandsvorhersageeinheit (13), angeordnet zum Erstellen einer vorhergesagten virtuellen Anlage, in der ein Betriebszustand nach Ablauf einer beliebigen Zeit durch Beschleunigen des Betriebszustands der von der virtuellen Anlagenerzeugungseinheit (12) bei einer beliebigen Geschwindigkeit erzeugten virtuellen Anlage vorhergesagt wird, wobei der Betriebszustand nach dem Ablauf der beliebigen Zeit durch die Betriebszustandsvorhersageeinheit (13) vorhergesagt wird; und
eine Betriebszustandsanzeigeeinheit (15) zum Anzeigen des Betriebszustands der tatsächlichen Anlage und des Betriebszustands der vorhergesagten virtuellen Anlage auf einer Betriebszustandsanzeigeeinheit (16),
ferner **gekennzeichnet durch** das Umfassen von Folgendem:
eine Betriebszustandsdiagnoseeinheit (21), angeordnet zum Diagnostizieren des Betriebszustands der tatsächlichen Anlage, während der Betriebszustand der vorhergesagten virtuellen Anlage diagnostiziert wird; und
eine Diagnoseergebnis-Anzeigeeinheit (23), angeordnet zum Anzeigen eines Diagnoseergebnisses der tatsächlichen Anlage und eines Diagnoseergebnisses der vorhergesagten virtuellen Anlage auf einer Diagnoseergebnis-Anzeigeeinheit (24).

2. Unterstützungsvorrichtung (1) für den Betrieb eines Kernkraftwerks nach Anspruch 1, ferner umfassend:
eine Betriebsablauf-Einstelleinheit (31) zum Einstellen von Betriebsabläufen, die dem Diagnoseergebnis der tatsächlichen Anlage zugeordnet sind, während Betriebsabläufe eingestellt werden, die dem Diagnoseergebnis von der vorhergesagten virtuellen Anlage entsprechen;
eine Betriebsablaufdatenspeichereinheit (32) zum Speichern von Betriebsablaufdaten, die mit dem Ergebnis des Diagnostizierens der Betriebszustände der tatsächlichen Anlage und der der vorhergesagten virtuellen Anlage übereinstimmen; und
eine Betriebsablaufanzeigeeinheit (33) zum Anzeigen der Betriebsabläufe der tatsächlichen Anlage und der Betriebsabläufe der vorhergesagten virtuellen Anlage.

3. Unterstützungsvorrichtung (1) für den Betrieb eines Kernkraftwerks nach Anspruch 2, ferner umfassend:
eine Betriebsbestätigungseinheit (41) zum Bestätigen, ob der Betrieb der tatsächlichen Anlage mit den Betriebsabläufen übereinstimmt oder nicht; und
eine Bestätigungsergebnis-Anzeigeeinheit (42) zum Anzeigen eines Bestätigungsergebnisses des Betriebs.

4. Unterstützungsverfahren für den Betrieb eines Kernkraftwerks, umfassend:
einen Schritt zum Erstellen einer virtuellen Anlage zum Erfassen von Betriebszustandsdaten einer tatsächlichen Anlage, Simulieren der tatsächlichen Anlage und Erstellen einer virtuellen Anlage, wobei der Schritt zum Erstellen der virtuellen Anlage Betriebszustandsdaten innerhalb einer vorgegebenen Periode erfasst und die Betriebszustandsdaten derart auf die virtuelle Anlage widerspiegelt, dass ein Betriebszustand der tatsächlichen Anlage mit dem der virtuellen Anlage übereinstimmt;
einen Betriebszustandsüberwachungsschritt zum Überwachen des Betriebszustands der tatsächlichen Anlage und zum Bereitstellen der Betriebszustandsdaten der tatsächlichen Anlage für den Erstellungsschritt der virtuellen Anlage, während Referenzdaten bereitgestellt werden, die im Voraus erstellt werden, um dem Betriebszustand zu entsprechen, falls dies im Betriebszustand der tatsächlichen Anlage auftritt, bis zum Schritt der virtuellen Anlagenerstellung;
einen Betriebszustandsvorhersageschritt zum Erstellen einer vorhergesagten virtuellen Anlage, in der ein Betriebszustand nach Ablauf einer beliebigen Zeit durch Beschleunigen des Betriebszustands der von der im Schritt des Erstellens der virtuellen Anlage erstellten virtuellen Anlage bei einer beliebigen Geschwindigkeit vorhergesagt wird; und
einen Betriebszustandsanzeigeschritt zum Anzeigen des Betriebszustands der tatsächlichen Anlage und des Betriebszustands der vorhergesagten virtuellen Anlage,
ferner **gekennzeichnet durch** das Umfassen von Folgendem:
einen Betriebszustandsdiagnoseschritt zum Diagnostizieren des Betriebszustands der tatsächlichen Anlage, während der Betriebszustand der vorhergesagten virtuellen Anlage diagnostiziert wird; und
einen Diagnoseergebnisanzeigeschritt zum Anzeigen eines Diagnoseergebnisses der tatsächlichen Anlage und eines Diagnoseergebnisses der vorhergesagten virtuellen Anlage.

5. Unterstützungsverfahren für den Betrieb eines Kernkraftwerks nach Anspruch 4, ferner umfassend:
einen Schritt zum Einstellen der Betriebsabläufe zum Einstellen der Betriebsabläufe, die dem Diagnoseergebnis der tatsächlichen Anlage zugeordnet sind, während Betriebsabläufe eingestellt werden, die dem Diagnoseergebnis von der vorhergesagten virtuellen Anlage entsprechen;
einen Betriebsablaufdatenspeicherschritt zum Speichern von Betriebsablaufdaten, die mit dem Ergebnis des Diagnostizierens der Betriebszustände der tatsächlichen Anlage und der der vorhergesagten virtuellen Anlage übereinstimmen; und
einen Betriebsablaufanzeigeschritt zum Anzeigen der Betriebsabläufe der tatsächlichen Anlage und der Betriebsabläufe der vorhergesagten virtuellen Anlage.

6. Unterstützungsverfahren für den Betrieb eines Kernkraftwerks nach Anspruch 5, ferner umfassend:
einen Betriebsbestätigungsschritt zum Bestätigen, ob der Betrieb des tatsächlichen Anlage mit den Betriebsverfahren übereinstimmt oder nicht; und
einen Bestätigungsergebnisanzeigeschritt zum Anzeigen eines Bestätigungsergebnisses des Betriebs.

## Revendications

1. Dispositif d'assistance au fonctionnement d'une centrale nucléaire (1), comprenant :
une unité de création de centrale virtuelle (12) prévue pour acquérir des données d'état de fonctionnement d'une centrale réelle, simuler la centrale réelle et créer une centrale virtuelle, l'unité de création de centrale virtuelle lisant les données d'état de fonctionnement selon une période donnée et prenant en compte les données d'état de fonctionnement dans la centrale virtuelle, de sorte qu'un état de fonctionnement de la centrale réelle soit conforme à celui de la centrale virtuelle ;
une unité de stockage de données de référence (14) destinée à stocker à l'avance des données de référence permettant de créer la centrale virtuelle conforme à divers états de fonctionnement de la centrale réelle ;
une unité de surveillance d'état de fonctionnement (11) prévue pour surveiller l'état de fonctionnement de la centrale réelle et envoyer les données d'état de fonctionnement de la centrale réelle à l'unité de création de centrale virtuelle (12), tout en acquérant auprès de l'unité de stockage de données de référence (14) les données de référence correspondant à l'état de fonctionnement, s'il apparaît dans l'état de fonctionnement de la centrale réelle et en envoyant les données de référence à l'unité de création de centrale virtuelle (12) ;
une unité de prédiction d'état de fonctionnement (13) prévue pour créer une centrale virtuelle prédite dans laquelle un état de fonctionnement après l'écoulement d'un temps arbitraire est prédit par accélération de l'état de fonctionnement de la centrale virtuelle créée par l'unité de création de centrale virtuelle (12), à une vitesse arbitraire, l'état de fonctionnement après l'écoulement de temps arbitraire étant prédit par l'unité de prédiction d'état (13) ; et
une unité d'affichage d'états de fonctionnement (15) destinée à afficher l'état de fonctionnement de la centrale réelle et l'état de fonctionnement de la centrale virtuelle prédite, sur une unité d'affichage d'états de fonctionnement (16),
**caractérisé en ce qu'**il comprend en outre :
une unité de diagnostic d'états de fonctionnement (21) prévue pour diagnostiquer l'état de fonctionnement de la centrale réelle, tout en diagnostiquant l'état de fonctionnement de la centrale virtuelle prédite ; et
une unité d'affichage de résultats de diagnostic (23) prévue pour afficher un résultat de diagnostic de la centrale réelle et un résultat de diagnostic de la centrale virtuelle prédite, sur une unité d'affichage de résultats de diagnostic (24).

2. Dispositif d'assistance au fonctionnement d'une centrale nucléaire (1) selon la revendication 1, comprenant en outre :
une unité d'établissement de procédures de fonctionnement (31) destinée à établir des procédures de fonctionnement correspondant au résultat de diagnostic de la centrale réelle, tout en établissant des procédures de fonctionnement correspondant au résultat de diagnostic de la centrale virtuelle prédite ;
une unité de stockage de données de procédures de fonctionnement (32) destinée à stocker des données de procédures de fonctionnement conformes au résultat de diagnostic des états de fonctionnement de la centrale réelle et à celui de la centrale virtuelle prédite ; et
une unité d'affichage de procédures de fonctionnement (33) destinée à afficher les procédures de fonctionnement de la centrale réelle et les procédures de fonctionnement de la centrale virtuelle prédite.

3. Dispositif d'assistance au fonctionnement d'une centrale nucléaire (1) selon la revendication 2, comprenant en outre :
une unité de confirmation de fonctionnement (41) destinée à confirmer si le fonctionnement de la centrale réelle est ou non en conformité avec les procédures de fonctionnement ; et
une unité d'affichage de résultat de confirmation (42) destinée à afficher un résultat de confirmation du fonctionnement.

4. Procédé d'assistance au fonctionnement d'une centrale nucléaire, comprenant :
une étape de création de centrale virtuelle consistant à acquérir des données d'état de fonctionnement d'une centrale réelle, simuler la centrale réelle et créer une centrale virtuelle, l'étape de création de centrale virtuelle consistant à lire les données d'état de fonctionnement selon une période donnée et prendre en compte les données d'état de fonctionnement dans la centrale virtuelle, de sorte qu'un état de fonctionnement de la centrale réelle soit conforme à celui de la centrale virtuelle ;
une étape de surveillance d'état de fonctionnement consistant à surveiller l'état de fonctionnement de la centrale réelle et à fournir les données d'état de fonctionnement de la centrale réelle à l'étape de création de centrale virtuelle, tout en fournissant des données de référence créées à l'avance pour correspondre à l'état de fonctionnement, s'il apparaît dans l'état de fonctionnement de la centrale réelle, à l'étape de création de centrale virtuelle ;
une étape de prédiction d'état de fonctionnement consistant à créer une centrale virtuelle prédite, dans laquelle un état de fonctionnement après l'écoulement d'un temps arbitraire est prédit par accélération de l'état de fonctionnement de la centrale virtuelle créée à l'étape de création de centrale virtuelle, à une vitesse arbitraire ; et
une étape d'affichage d'états de fonctionnement consistant à afficher l'état de fonctionnement de la centrale réelle et l'état de fonctionnement de la centrale virtuelle prédite,
**caractérisé en ce qu'**il comprend en outre :
une étape de diagnostic d'états de fonctionnement consistant à diagnostiquer l'état de fonctionnement de la centrale réelle, tout en diagnostiquant l'état de fonctionnement de la centrale virtuelle prédite ; et
une étape d'affichage de résultats de diagnostic consistant à afficher un résultat de diagnostic de la centrale réelle et un résultat de diagnostic de la centrale virtuelle prédite.

5. Procédé d'assistance au fonctionnement d'une centrale nucléaire selon la revendication 4, comprenant en outre :
une étape d'établissement de procédures de fonctionnement consistant à établir des procédures de fonctionnement correspondant au résultat de diagnostic de la centrale réelle, tout en établissant des procédures de fonctionnement correspondant au résultat de diagnostic de la centrale virtuelle prédite ;
une étape de stockage de données de procédures de fonctionnement consistant à stocker des données de procédures de fonctionnement conformes au résultat de diagnostic des états de fonctionnement de la centrale réelle et à celui de la centrale virtuelle prédite ; et
une étape d'affichage de procédures de fonctionnement consistant à afficher les procédures de fonctionnement de la centrale réelle et les procédures de fonctionnement de la centrale virtuelle prédite.

6. Procédé d'assistance au fonctionnement d'une centrale nucléaire selon la revendication 5, comprenant en outre :
une étape de confirmation de fonctionnement consistant à confirmer si le fonctionnement de la centrale réelle est ou non en conformité avec les procédures de fonctionnement ; et
une étape d'affichage de résultat de confirmation consistant à afficher un résultat de confirmation du fonctionnement.
